# EUROPEAN PATENT APPLICATION

(11) **EP 3 542 930 A1**
(43) Date of publication of application: **25.09.2019**
(21) Application number: 18163604.4
(22) Date of filing: 23.03.2018
(51) Int. Cl.: B22F 3/105, B33Y 30/00

(54) **DOCTOR BLADE DEVICE**

(71) Applicant: United Grinding Group Management AG, 3005 Bern (CH)
(72) Inventor: Cloots, Michael, 9008 St. Gallen (CH); Gutknecht, Kai, 8730 Uznach (CH)
(74) Representative: Maiwald Patent- und Rechtsanwaltsgesellschaft mbH

(57) **Abstract**

The invention relates to a doctor blade device, an additive manufacturing system, and a method for applying a powder material to a substrate by means of a doctor blade. The doctor blade device comprises a doctor blade unit and a gas flow opening.

The doctor blade unit is moveable relative to the substrate and configured to spread the powder material onto the substrate. The gas flow opening is arranged at the doctor blade unit and configured to provide a gas flow. The gas flow opening is, together with the doctor blade unit, moveable relative to the substrate.

## Description

### FIELD OF THE INVENTION

The invention relates to a doctor blade device, an additive manufacturing system, and a method for applying a powder material to a substrate by means of a doctor blade.

### BACKGROUND OF THE INVENTION

Additive manufacturing as, e.g., selective laser melting, can be understood in that a thin layer of a metal powder is spread onto a substrate and then fused or hardened by a laser beam. The laser beam effects a melting and welding of the metal powder particles to form solid metal. This process can be repeated layer by layer until the product is complete.

When melting the metal powder particles, smoke and in particular, a smoke plume occurs. The smoke interferes with the laser beam and impedes a constant (and maximum) laser power, which is crucial for the product quality. The smoke further condenses within the process chamber of the additive manufacturing system and obstructs, e.g., the optical elements of the additive manufacturing system.

Conventional additive manufacturing systems may therefore comprise gas flow elements to disperse the smoke, these gas flow elements are however cumbersome and/or insufficient. DE 10 2004 031 881 A1 discloses a device with a suction element positionable above a working region and a wall arrangement enclosing the working region. The suction element comprises at least one suction opening arranged on an inside of the suction element and connected to a device that produces a vacuum.

### SUMMARY OF THE INVENTION

There maybe a need to provide an improved doctor blade device, system and method for additive manufacturing, which allow improving a smoke removal from an additive manufacturing process chamber.

The problem of the present invention is solved by the subject-matters of the independent claims, wherein further embodiments are incorporated in the dependent claims. It should be noted that the aspects of the invention described in the following apply also to the doctor blade device, the additive manufacturing system, and the method for applying a powder material to a substrate by means of a doctor blade.

According to the present invention, a doctor blade device for applying a powder material to a substrate is presented. The doctor blade device comprises a doctor blade unit and a gas flow opening.

The doctor blade unit is moveable relative to the substrate and configured to spread the powder material onto the substrate. The gas flow opening is arranged at the doctor blade unit and configured to provide a gas flow. The gas flow opening is, together with the doctor blade unit, moveable relative to the substrate.

The doctor blade device according to the invention maybe understood to have a gas flow opening integrated into the doctor blade unit. Consequently, the gas flow opening is moveable with the doctor blade unit, which allows the gas flow to take effect directly at the doctor blade unit and thereby directly at the position where powder material is spread onto the substrate and where the spread powder material is irradiated and thereby melted and welded by a laser beam. As a result, the gas flow opening and thereby the gas flow takes effect directly at the position, where the laser beam generates smoke and where the smoke would otherwise hinder the laser beam. This makes the gas flow and the smoke removal in particular effective, so that the laser beam is less or not affected by smoke and the smoke does less or not condense within the process chamber of the additive manufacturing system. This benefit is achieved without additional, cumbersome components and in particular without other moveable components than the doctor blade device. As a further result, the at least nearly unaffected laser beam allows manufacturing products with improved quality, while deficient products are avoided, which decreases manufacturing and product costs.

The doctor blade device according to the invention is suitable for additive manufacturing systems as, e.g., selective laser melting systems. Selective laser melting can be understood in that thin layers of fine metal powder are evenly distributed onto a substrate by means of a doctor blade as coating mechanism, which is fastened to an indexing table that moves in a vertical axis Z. This may take place inside a chamber containing a tightly controlled atmosphere of inert gas at very low oxygen levels. The term "substrate" can be understood as the substrate as such or as a previous powder material layer. Once the layer has been distributed, the 2D layer or slice of the product may be fused or hardened by selectively melting the powder. This may be accomplished by means of a high-power laser beam directed in X and Y directions. The laser energy shall be configured to permit a melting and welding of the fine metal powder particles to form solid metal. This process shall be repeated layer after layer until the product is complete.

The term "doctor blade" can be understood as doctor knife, spreading knife, squeegee, scraper, wiper, coater, roller or the like. The doctor blade device can be understood as any kind of coating mechanism suitable to spread or distribute a material on a substrate or carrier or another material layer and/or to remove excess material from the substrate or other material layer. The doctor blade device may comprise a doctor blade body and a doctor blade element. The doctor blade element may be configured to spread the powder material onto the substrate or other material layer. The doctor blade body may hold or support the doctor blade element and the doctor blade element may extend at least partially along the doctor blade body. The doctor blade body and the doctor blade element may be moveable relative to the substrate and to a fixed powder bed in the doctor blade device. The doctor blade body and the doctor blade element can be one integral part or comprise two or more components.

The gas flow opening may be a simple hole, a gas port, a gas nozzle or the like. It may also be a single opening, a row of openings, an array of openings or the like.

The gas flow opening may be a gas outlet configured to direct the gas flow from the doctor blade unit to the substrate, or vice versa, the gas flow opening may be a gas inlet configured to direct the gas flow from the substrate to the doctor blade unit. In other words, the doctor blade unit comprising the gas flow opening may be a gas suction apparatus or a gas blower apparatus.

In any case, the doctor blade device may further comprise a gas flow orifice configured to form a gas circulation between the gas flow opening and the gas flow orifice. The gas flow orifice may be a simple hole, a gas port, a gas nozzle or the like. It may also be a single opening, a row of openings, an array of openings or the like. In case the gas flow opening is a gas outlet, the gas flow orifice is a gas inlet, or vice versa, in case the gas flow opening is a gas inlet, the gas flow orifice is a gas outlet.

The gas flow orifice may be stationary or fixedly arranged relative to the substrate. In other words, the gas flow orifice does not move with the doctor blade device, but is fixed. It can be, e.g., mounted to a substrate holding frame.

The gas flow may be configured to reduce smoke generated by a laser unit scanning the powder material spread on the substrate. The gas flow may be an inert gas flow. The gas flow opening may be configured to provide the gas flow essentially parallel to a motion direction of the doctor blade unit relative to the substrate or in any other angular direction relative to the motion direction of the doctor blade unit.

According to the present invention, also an additive manufacturing system for applying a powder material to a substrate is presented. The additive manufacturing system comprises the doctor blade device as described above and a laser unit. The laser unit is configured to scan or irradiate the powder material spread onto the substrate by means of the doctor blade device. This irritation or scanning of the laser unit may lead to a melting or welding of the powder material particles into a solid material block.

The laser unit may be configured so that a laser beam generated by the laser unit hits the spread material behind the doctor blade device opposite to the movement of the doctor blade device. This allows to irradiate the newly spread material right after it is spread. The laser unit may be correspondingly arranged behind or at an averted side of the doctor blade device's movement or may otherwise comprise a reflecting element configured to reflect the laser beam to a location behind the doctor blade device's movement.

The additive manufacturing system may further comprise a control unit configured to control a movement of the doctor blade device in accordance with an operation of the laser unit, so that the gas flow opening of the doctor blade device is at the position of the operating laser beam. In other words, the movement of the doctor blade device can be adapted or integrated into a scanning movement of the operating laser beam. As a result, spreading material by the doctor blade device and irradiating the material by the laser unit can be done essentially simultaneously.

According to the present invention, also a method for applying a powder material to a substrate by means of a doctor blade is presented. It comprises the following steps, not necessarily in this order:
a) moving a doctor blade unit relative to the substrate to spread the powder material onto the substrate, and
b) providing a gas flow on the substrate by means of a gas flow opening arranged at the doctor blade unit.

The gas flow opening moves, together with the doctor blade unit, relative to the substrate.

The present method for applying a powder material to a substrate may further comprise a scanning or irradiating of the spread powder material by means of the laser unit.

In an example, the gas flow opening directs the gas flow from the doctor blade unit to the substrate. In another example, the gas flow opening directs the gas flow from the substrate to the doctor blade unit. In any case, the method for applying a powder material to a substrate may further comprise a forming of a gas circulation between the gas flow opening and a gas flow orifice. The gas flow orifice may be fixedly arranged relative to the substrate.

It shall be understood that the doctor blade device, the additive manufacturing system, and the method for applying a powder material to a substrate by means of a doctor blade according to the independent claims have similar and/or identical preferred embodiments, in particular, as defined in the dependent claims. It shall be understood further that a preferred embodiment of the invention can also be any combination of the dependent claims with the respective independent claim.

These and other aspects of the present invention will become apparent from and be elucidated with reference to the embodiments described hereinafter.

### BRIEF DESCRIPTION OF THE DRAWINGS

Exemplary embodiments of the invention will be described in the following with reference to the accompanying drawings:
Figure 1 shows schematically and exemplarily a side view of an embodiment of an additive manufacturing system and a doctor blade device according to the invention for applying a powder material to a substrate.
Figure 2 shows schematically and exemplarily a side view of another embodiment of an additive manufacturing system and a doctor blade device according to the invention for applying a powder material to a substrate.
Figure 3 shows a schematic overview of steps of a manufacturing method according to the invention for a doctor blade device for applying a powder material to a substrate.

### DETAILED DESCRIPTION OF EMBODIMENTS

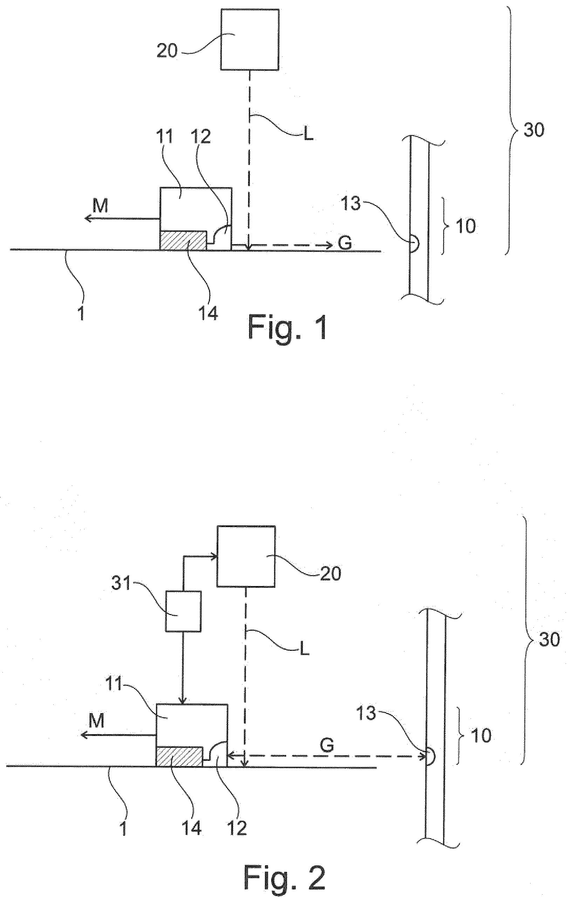

**Figures 1 to 2** show schematically and exemplarily side views of different embodiments of an additive manufacturing system 30 and a doctor blade device 10 according to the invention for applying a powder material to a substrate 1. The additive manufacturing system 30 comprises a laser unit 20 and the doctor blade device 10.

The laser unit 20 irradiates the powder material spread onto the substrate 1 by means of the doctor blade device 10. The irritation or scanning of the laser unit 20 leads to a melting or welding of the powder material particles into a solid material block. A laser beam L generated by the laser unit 20 hits the spread material behind the doctor blade device 10 when seen in a movement direction M of the doctor blade device 10.

The doctor blade device 10 comprises a doctor blade unit 11 and a gas flow opening 12. The doctor blade unit 11 is moveable relative to the substrate 1 and spreads the powder material onto the substrate 1 by means of a doctor blade element 14 extending at least partially along the doctor blade unit 11. The gas flow opening 12 is arranged at the doctor blade unit 11 provides a gas flow G. The gas flow opening 12 is, together with the doctor blade unit 11, moveable relative to the substrate 1. The gas flow opening 12 is here a gas nozzle.

In the embodiment shown in **Figure 1****,** the gas flow opening 12 is a gas outlet directing the gas flow G from the doctor blade unit 11 to the substrate 1. The doctor blade device 10 further comprises a gas flow orifice 13 to form a gas circulation between the gas flow opening 12 and the gas flow orifice 13. Here, the gas flow orifice 13 is a gas inlet, which is stationary arranged relative to the substrate 1 e.g. in a process chamber wall. The gas flow opening 12 provides the gas flow G essentially parallel, but opposite to a motion direction M of the doctor blade unit 11 relative to the substrate 1 to reduce smoke generated by the laser unit 20 when scanning the powder material spread on the substrate 1.

In the embodiment shown in **Figure 2****,** the gas flow opening 12 is a gas inlet directing the gas flow from the substrate 1 to the doctor blade unit 11. The gas flow opening 12 provides the gas flow G essentially parallel and in the same direction as the motion direction M of the doctor blade unit 11 relative to the substrate 1. The gas flow orifice 13 is here consequently a gas outlet to form a gas circulation between the gas flow opening 12 and the gas flow orifice 13. The gas flow orifice 13 does again not move with the doctor blade device 10, but is fixed.

As shown in Figure 2, the additive manufacturing system 30 may further comprise a control unit 31 to control a movement of the doctor blade device 10 in accordance with an operation of the laser unit 20, so that the gas flow opening 12 of the doctor blade device 10 is essentially at the position of the operating laser beam. The control unit 31 controls the spreading of the material by the doctor blade device and the irradiation of the material by the laser unit to be essentially simultaneously.

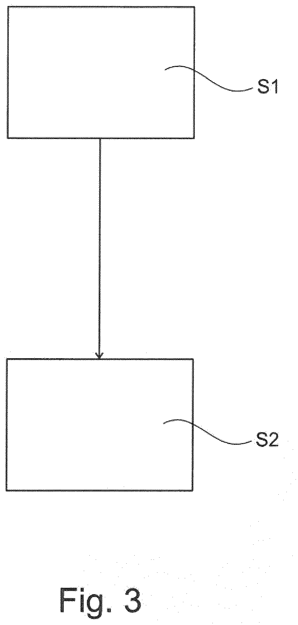

**Figure 3** shows a schematic overview of steps of a method for applying a powder material to a substrate 1 by means of a doctor blade. The method comprises the following steps, not necessarily in this order:
- In a first step S 1, moving a doctor blade unit 11 relative to the substrate 1 to spread the powder material onto the substrate 1.
- In a second step S2, providing a gas flow on the substrate 1 by means of a gas flow opening 12 arranged at the doctor blade unit 11.

The gas flow opening 12 moves, together with the doctor blade unit 11, relative to the substrate 1.

The method for applying a powder material to a substrate 1 may further comprise an optional step (not shown) of irradiating the powder material spread onto the substrate 1 1 by means of the laser unit 20.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfil the functions of several items re-cited in the claims. The mere fact that certain measures are re-cited in mutually different dependent claims does not indicate that a combination of these measures cannot be used to advantage. Any reference signs in the claims should not be construed as limiting the scope.

## Claims

1. A doctor blade device (10) for applying a powder material to a substrate (1), comprising:
- a doctor blade unit (11), and
- a gas flow opening (12),
wherein the doctor blade unit (11) is moveable relative to the substrate (1) and configured to spread the powder material onto the substrate (1),
wherein the gas flow opening (12) is arranged at the doctor blade unit (11) and configured to provide a gas flow, and
wherein the gas flow opening (12) is, together with the doctor blade unit (11), moveable relative to the substrate (1).

2. Doctor blade device (10) according to claim 1, wherein the gas flow opening (12) is a gas outlet configured to direct the gas flow from the doctor blade unit (11) to the substrate (1).

3. Doctor blade device (10) according to claim 1, wherein the gas flow opening (12) is a gas inlet configured to direct the gas flow from the substrate (1) to the doctor blade unit (11).

4. Doctor blade device (10) according to one of the preceding claims, further comprising a gas flow orifice (13) configured to form a gas circulation between the gas flow opening (12) and the gas flow orifice (13), wherein the gas flow orifice (13) is fixedly arranged relative to the substrate (1).

5. Doctor blade device (10) according to one of the preceding claims, wherein the gas flow opening (12) is configured to provide the gas flow essentially parallel to the motion direction of the doctor blade unit (11) relative to the substrate (1).

6. Doctor blade device (10) according to one of the preceding claims, wherein the gas flow opening (12) is integrated into the doctor blade unit (11).

7. Doctor blade device (10) according to one of the preceding claims, wherein the gas flow is configured to reduce smoke generated by a laser unit (20) scanning the powder material spread on the substrate (1).

8. Doctor blade device (10) according to one of the preceding claims, wherein the gas flow is an inert gas flow.

9. An additive manufacturing system (30) for applying a powder material to a substrate (1), comprising a doctor blade device (10) according to one of the preceding claims and a laser unit (20), wherein the laser unit (20) is configured to scan the powder material spread on the substrate (1) by means of the doctor blade device (10).

10. A method for applying a powder material to a substrate (1) by means of a doctor blade, comprising the following steps:
- moving a doctor blade unit (11) relative to the substrate (1) to spread the powder material onto the substrate (1), and
- providing a gas flow on the substrate (1) by means of a gas flow opening (12) arranged at the doctor blade unit (11),
wherein the gas flow opening (12) moves, together with the doctor blade unit (11), relative to the substrate (1).

11. The method according to claim 10, wherein the gas flow opening (12) directs the gas flow from the doctor blade unit (11) to the substrate (1).

12. The method according to claim 10, wherein the gas flow opening (12) directs the gas flow from the substrate (1) to the doctor blade unit (11).

13. The method according to one of the preceding claims, the method further comprising a step of forming a gas circulation between the gas flow opening (12) and a gas flow orifice (13), wherein the gas flow orifice (13) is fixedly arranged relative to the substrate (1).

14. The method according to one of the preceding claims, the method further comprising a step of scanning the powder material spread on the substrate (1) by means of a laser unit (20).
